# EUROPÄISCHE PATENTSCHRIFT

(11) **EP 3 849 853 B1**
(45) Veröffentlichungstag und Bekanntmachung des Hinweises auf die Patenterteilung: **11.10.2023**
(21) Anmeldenummer: 19735521.7
(22) Anmeldetag: 26.06.2019
(51) Int. Cl.: B60R 22/24, B62D 25/04, B62D 65/14

(54) **KAROSSERIESTRUKTUR FÜR EIN FAHRZEUG**
BODY STRUCTURE FOR A VEHICLE
STRUCTURE DE CARROSSERIE POUR UN VÉHICULE

(30) Priorität: 11.09.2018 DE 102018215367
(43) Veröffentlichungstag der Anmeldung: 21.07.2021
(73) Patentinhaber: VOLKSWAGEN AKTIENGESELLSCHAFT, 38440 Wolfsburg (DE)
(72) Erfinder: GASMANN, Wadim, 38547 Calberlah (DE); CORDES, Jürgen, 38108 Braunschweig (DE); GRAUL, Matthias, 38465 Brome (DE)
(86) Internationale Anmeldenummer: PCT/EP2019/067052
(87) Internationale Veröffentlichungsnummer: WO 2020/052827

(56) Entgegenhaltungen:
- EP-A1- 0 639 485
- EP-A1- 0 730 536
- EP-A1- 1 316 484
- WO-A1-01/70557
- FR-A1- 2 619 773

## Beschreibung

Die Erfindung betrifft eine Karosseriestruktur für ein Fahrzeug nach dem Oberbegriff des Anspruches 1 sowie ein Verfahren zum Zusammenbau einer solchen Karosseriestruktur nach dem Anspruch 7.

Die B-Säule eines Kraftfahrzeugs erstreckt sich in vertikaler Richtung zwischen einer Dachstruktur und einem seitlichen Schweller des Fahrzeugs. Die B-Säule wirkt einerseits eine Versteifung der Seitenstruktur der Fahrzeugkarosserie. Andererseits sind in der B-Säule Anbauteile montiert, etwa einer Gurtreaktor oder dergleichen. Zudem begrenzt die B-Säule einen vorderen Einstieg und gegebenenfalls einen hinteren Einstieg des Kraftfahrzeugs. Zur Erhöhung einer Seitenaufprallfestigkeit im Seitencrashfall ist im Hohlprofil der B-Säule ein Verstärkungsblechteil integriert, das einer unfallbedingten Deformation der B-Säule in den Fahrzeuginnenraum hinein entgegenwirkt.

Eine gattungsgemäße Karosseriesäule, insbesondere B-Säule, ist aus einem fahrzeuginneren Blechinnenteil und aus einem fahrzeugäußeren Blechaußenteil aufgebaut, wodurch ein Hohlträger mit einem, in der Fahrzeughochrichtung verlaufenden sowie im Querschnitt geschlossenen Hohlprofil gebildet ist. An dem Hohlträger der Karosseriesäule sind Funktionselemente eines Sicherheitsgurtsystems und/oder eine Säulenverkleidung montierbar.

In einer herkömmlichen Montage-Abfolge wird das fahrzeuginnere Blechinnenteil über Laser und/oder Punktschweißung an Fügeflansche der bereits in der Fahrzeugkarosserie verbauten fahrzeugäußeren Blechaußenteiles verschweißt. Die zusammengebaute Fahrzeugkarosserie wird einem Lackier-Prozessschritt zugeführt. Nach dem Lackier-Prozessschritt wird die Fahrzeugkarosserie einer Montagelinie zugeführt, die in einer Fertigungsrichtung hintereinander angeordnete, voneinander unabhängige Arbeitsstationen aufweist, in denen jeweils Komponenten des Sicherheitsgurtsystems, etwa der Gurtreaktor, die Gurtumlenkung, die Gurthöhenverstellung, Gurtendbeschläge und dergleichen, sowie die Säulenverkleidung montiert werden. Die Montage der Gurt-Komponenten erfolgt im Handeinbau. Hierzu befindet sich der Werker in ergonomisch ungünstiger Körperstellung im Fahrzeug-Innenraum der Fahrzeugkarosserie. Von daher ist die Montage für den Werker mit erhöhtem Arbeitsaufwand verbunden sowie ergonomisch ungünstig.

Aus der WO 01/70557 A1 ist ein Strukturelement zur Montage an einer Fahrzeugstruktur bekannt, bei der die B-Säule ein lasttragendes Trägerelement aufweist, an dem Verkleidungsteile sowie Funktionselemente eines Sicherheitsgurtsystems montierbar sind. Aus der FR 2 619 773 A1 werden die Komponenten eines Sicherheitsgurtsystems auf einem Modulträger, der die innere Säulenverkleidung bildet, vormontiert, bevor diese an der B-Säule montiert wird. Ebenso werden in der EP 0 639 485 A1 Komponenten eines Sicherheitsgurtsystems zu einem Modulträger vormontiert, der die innere Säulenverkleidung bildet, bevor diese an der B-Säule montiert wird. Aus der EP 1 265 777 B1 ist ein Strukturelement zur Montage an einer Fahrzeugstruktur bekannt. Aus der EP 1 316 484 A1 und aus der EP 0 730 536 B1 sind weitere Karosseriestrukturen für ein Fahrzeug bekannt. Aus der DE 10 2007 045 143 A1 ist eine Bearbeitungs- oder Fertigungsanlage bekannt. Aus der DE 101 60 885 A1 ist ein Verfahren zur Herstellung einer Fahrzeugkarosserie bekannt.

Die Aufgabe der Erfindung besteht darin, eine Karosseriestruktur für ein Fahrzeug sowie ein Verfahren zur Herstellung einer solchen Karosseriestruktur bereitzustellen, die im Vergleich zum Stand der Technik mit reduzierter Fertigungszeit erfolgt sowie für die Werker im fahrzeugbauenden Werk ergonomisch günstiger ist.

Die Aufgabe ist durch die Merkmale des Anspruches 1 oder 9 gelöst. Bevorzugte Weiterbildungen der Erfindung sind in den Unteransprüchen offenbart.

Gemäß der Erfindung erfolgt die Montage der Komponenten des Sicherheitsgurtsystems sowie der Säulenverkleidung nicht mehr bei bereits fertig zusammengebauter Karosseriestruktur. Vielmehr wird gemäß dem kennzeichnenden Teil des Anspruches 1 ein Modulträger bereitgestellt, der als eine, von der Fahrzeugkarosserie separate Vormontageeinheit dient, an der die Komponenten des Sicherheitsgurtsystems und/oder die Säulenverkleidung bereits vormontierbar sind. Der Modulträger mit den bereits daran vormontierten Komponenten und/oder der Säulenverkleidung wird in einem Zusammenbau-Prozessschritt an säulenseitige Anbindungsstellen an das Blechinnenteil des Hohlträgers angefügt.

Gemäß dem kennzeichnenden Teils des Anspruchs 1, der Modulträger und das Blechinnenteil eine Positionierhilfe aufweisen, mittels der während der Montage der Modulträger in einer Schraubposition am Blechinnenteil lagerichtig vorpositionierbar ist, in welcher Schraubposition der Modulträger am Blechinnenteil verschraubbar ist. Die Positionierhilfe zumindest eine schlüssellochartige Positionieröffnung im Blechinnenteil aufweist, die aus einem querschnittsgroßen Einsteckbereich und einem daran nach fahrzeugunten anschließenden querschnittskleinen Bereich besteht, und dass die Positionierhilfe einen damit zusammenwirkenden Positionierbolzen aufweist, der von einer Basisfläche des Modulträgers abragt und einen ausgeweiteten Bolzenkopf aufweist, der um einen lichten Ringspalt von der Montagefläche des Modulträgers beanstandet ist, der größer als die Blechdicke des Blechinnenteils ist, und dass bei der Vorpositionierung zunächst der Modulträger mit seinem Positionierbolzen in den Einsteckbereich der BlechinnenteilPositionieröffnung eingesteckt wird und anschließend unter Schwerkraftwirkung nach fahrzeugunten verlagert wird bis der Positionierbolzen auf eine Bodenkante der Positionieröffnung aufliegt und ein Öffnungsrandbereich der Positionieröffnung formschlüssig in den modulträgerseitigen Ringspalt einragt.

In diesem Fall ist der Modulträger in seiner lagerichtigen Schraubposition vorpositioniert, sodass im nachfolgenden Schraub-Prozessschritt der Modulträger am Blechinnenteil festspannbar ist.

Nachfolgend wird eine Prozesskette zum Zusammenbau der Karosseriestruktur beschrieben: Demnach erfolgt prozesstechnisch vor dem obigen Zusammenbau-Prozessschritt ein Lackier-Prozessschritt, bei dem die Fahrzeugkarosserie mit noch nicht daran montiertem Modulträger lackiert wird. Davon unabhängig wird der Modulträger in einem Vormontage-Prozessschritt mit den Komponenten des Sicherheitsgurtsystems und/oder mit der Säulenverkleidung bestückt. Der Modulträger mit den daran vormontierten Komponenten bzw. der Säulenverkleidung bildet eine Vormontageeinheit, die im Zusammenbau-Prozessschritt an das karosserieseitige Blechinnenteil der Karosseriesäule gefügt wird.

Um bei dem Fügevorgang eine Beschädigung der Lackschicht des Blechinnenteils zu vermeiden, ist es bevorzugt, wenn der Fügevorgang nicht durch eine Schweißverbindung erfolgt, sondern vielmehr durch eine Formschlußverbindung, und zwar insbesondere eine Schraubverbindung, bei der der Modulträger an das karosserieseitige Blechinnenteil verschraubt wird.

Der Modulträger kann in einer Ausführungsform als ein flächiges Blechteil ausgeführt sein.

Alternativ dazu kann der Modulträger in beliebiger anderer Form ausgeführt sein. Beispielhaft kann der Modulträger als ein Hohlträger ausgeführt sein, etwa als ein Vierkant-Rohr oder dergleichen.

Die Bauteil-Geometrie des Blechaußenteils kann wie folgt ausgeführt sein: So kann das Blechaußenteil einen, in der Fahrzeugquerrichtung fahrzeugäußeren Profilboden aufweisen, der an (sich in der Fahrzeughochrichtung erstreckenden) Profilkanten nach fahrzeuginnen in eine vordere Profilflanke und in eine hintere Profilflanke übergeht. Von diesen beiden Profilflanken können jeweils nach fahrzeugvorne und/oder nach fahrzeughinten Fügeflansche abragen. Das Blechinnenteil kann einen fahrzeuginneren Profilboden aufweisen, der das Hohlprofil des Blechaußenteils überdeckt und in der Fahrzeuglängsrichtung nach vorne und nach fahrzeughinten ebenfalls mit Fügeflanschen verlängert ist, die unter Bildung einer Flanschverbindung an den Blechinnenteil-Fügeflanschen angebunden ist.

Bevorzugt ist der Modulträger über eine erste Schraubverbindung (insbesondere Doppelverschraubung) am oberen Kopfabschnitt des Blechinnenteils angebunden und über eine zweite Schraubverbindung (insbesondere Doppelverschraubung) am unteren Fußabschnitt des Blechinnenteils angebunden. Zur Realisierung einer solchen Schraubverbindung der Modulträger und des Blechinnenteil mit ihren Schraublöchern in der Fahrzeugquerrichtung in Flucht übereinanderliegen. Durch die Schraublöcher ist ein Schraubbolzen geführt, dessen Schraubachse bevorzugt in der Fahrzeugquerrichtung ausgerichtet ist. Der Schraubbolzen kann mit einer am Blechinnenteil befestigten Schweißmutter verschraubt sein, sodass der Modulträger und das Blechinnenteil zwischen einem Bolzenkopf des Schraubbolzens und der Schweißmutter verspannbar sind.

Nachfolgend ist ein Ausführungsbeispiel der Erfindung anhand der beigefügten Figuren beschrieben.

Es zeigen:
- Fig. 1: In einer Seitenansicht mit teilweisem Aufriss ein zweispuriges Fahrzeug;
- Fig. 2: eine vergrößerte Seitenschnittansicht auf eine B-Säule mit einer Blickrichtung ausgehend vom Fahrzeuginnenraum;
- Fig. 3: eine Vormontageeinheit bestehend aus einem Modulträger mit daran vormontiertem Sicherheitsgurtsystem;
- Fig. 4: einen Hohlträger mit davon noch demontierter Vormontageeinheit;
- Fig. 5 und 6: jeweils Schnittdarstellungen durch die B-Säule;
- Fig. 7 bis 9: jeweils Darstellungen, anhand derer eine Montagefolge zur Montage der B-Säule veranschaulicht ist;
- Fig. 10 und 11: jeweils Ansichten einer Positionierhilfe zur Vorpositionierung des Modulträgers am Blechinnenteil der B-Säule

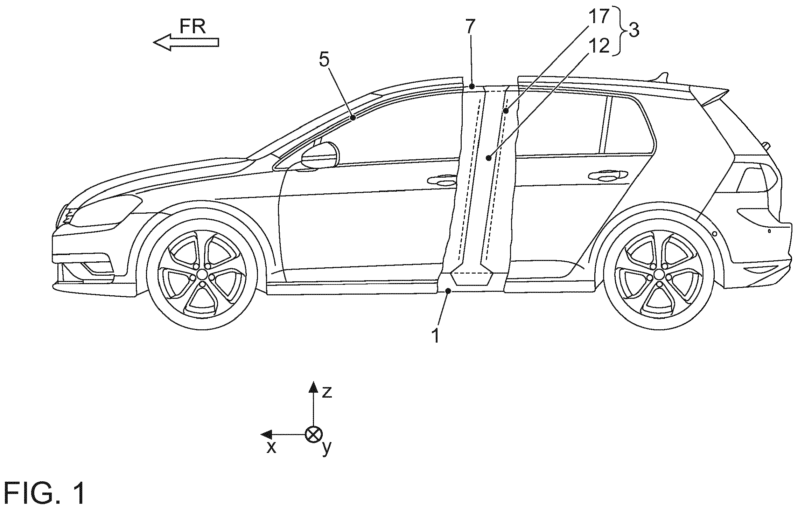

In der Fig. 1 ist ein Kraftfahrzeug gezeigt, bei dem in der Fahrzeuglängsrichtung x im mittleren Fahrzeugbereich in einem teilweisen Aufriss eine Seitenwandbaugruppe einer Fahrzeugkarosserie hervorgehoben ist. Die Fahrzeugkarosserie weist einen seitlichen Schweller 1 auf. Eine B-Säule 3 der Seitenwandbaugruppe ist in der Fahrzeuglängsrichtung x hinter einer A-Säule 5 angeordnet und verbindet in der Fahrzeughochrichtung z den Schweller 1 mit einer Dachstruktur 7 der Fahrzeugkarosserie. Die B-Säule 3 dient einerseits der Versteifung der Fahrzeugkarosserie und andererseits zur Aufnahme von Anbauteilen, etwa einem Gurtaufroller oder dergleichen.

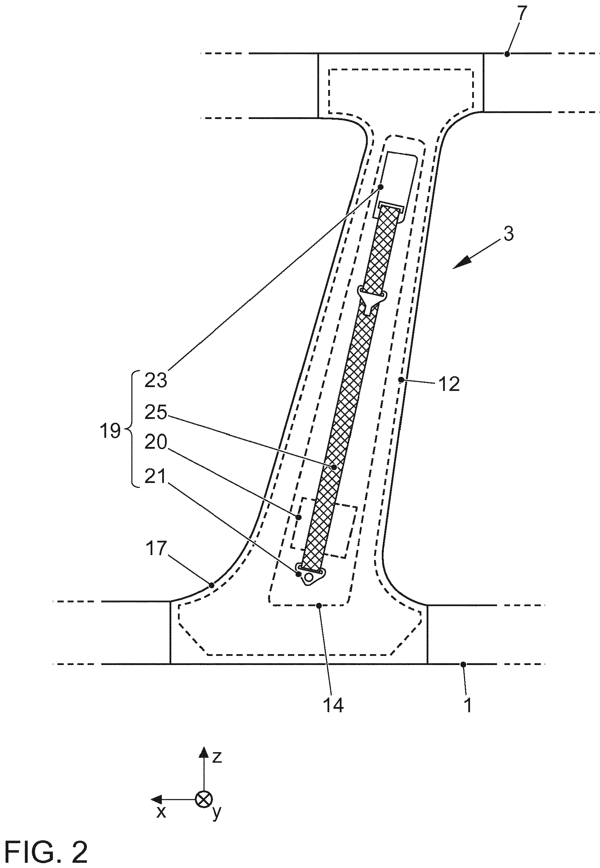

In der Fig. 2 sind an einem gestrichelt dargestellten Hohlträger 12 der B-Säule 3 eine Säulenverkleidung 17 sowie ein Sicherheitsgurtsystem 19 montiert. Das Sicherheitsgurtsystem 19 weist in der Fig. 2 einen bodenseitigen Gurt-Endbeschlag 21, einen Gurtaufroller 20, einen nicht gezeigten Gurtumlenker und einen höhenverstellbaren Umlenkbeschlag 23 für einen Sicherheitsgurt 25 auf.

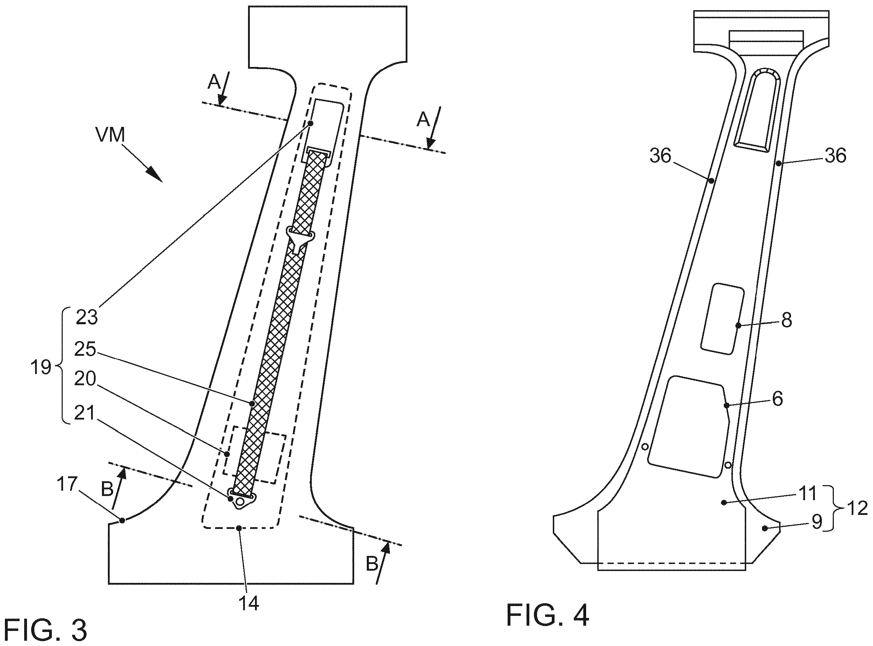

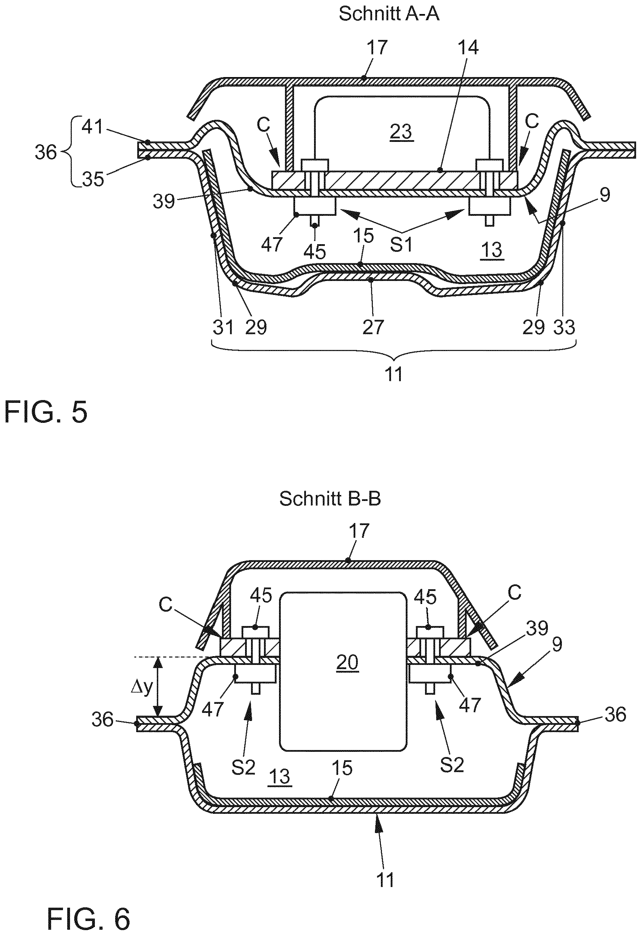

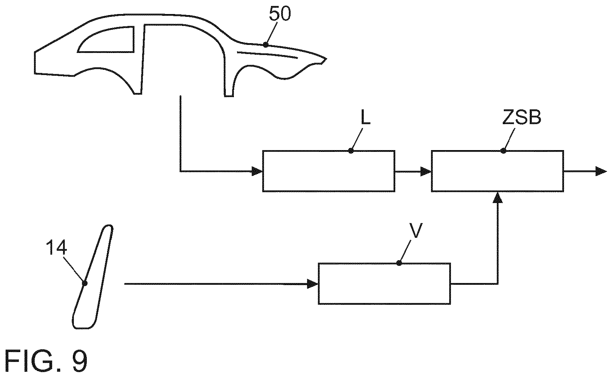

Der Kern der Erfindung besteht darin, dass die obigen Funktionselemente 20, 21, 23 des Sicherheitsgurtsystems 19 nicht direkt am Hohlträger 12 montiert sind, sondern an einen Modulträger 12. Wie später noch beschrieben wird, ist der Modulträger 12 im Fertigungsprozess Bestandteil einer, von der Fahrzeugkarosserie separaten Vormontageeinheit VM (Figur 3), an der die Funktionselemente 20, 21, 23 des Sicherheitsgurtsystems 19 und eine Säulenverkleidung 17 vormontierbar sind. Die Vormontageeinheit VM wird mit bereits daran vormontierten Funktionselementen 20, 21, 23 und Säulenverkleidung 17 in einen Zusammenbau-Prozessschritt ZSB (Figur 9) an einer säulenseitigen oberen Schraubverbindung S1 (Figur 5) an den Kopfbereich des Blechinnenteils 9 verschraubt und an einer unteren Schraubverbindung S2 (Figur 6) an den Fußbereich des Blechinnenteils 9 der B-Säule 3 verschraubt.

Nachfolgend ist anhand der Figuren 2 bis 6 ist der Aufbau der B-Säule 3 beschrieben. Demzufolge weist die B-Säule 3 den bereits erwähnten Hohlträger 12 auf. Dieser ist aus einem fahrzeuginneren Blechinnenteil 9 und einem fahrzeugäußeres Blechaußenteil 11 aufgebaut. Der vom Blechinnenteil 9 und vom Blechaußenteil 11 gebildete Hohlträger 12 begrenzt ein, in der Fahrzeughochrichtung z verlaufendes sowie im Querschnitt geschlossenes Hohlprofil 13. Innerhalb des Hohlprofils 13 erstreckt sich ein Verstärkungsblechteil 15 in der Fahrzeughochrichtung z. In dem Blechinnenteil 9 sind gemäß der Figur 3 Montageöffnungen 6, 8 ausgebildet, in denen jeweils der Gurtretraktor 20 und der nicht gezeigte Gurtumlenker positionierbar sind.

Wie aus der Fig. 5 oder 6 weiter hervorgeht, ist das Blechaußenteil 11 der B-Säule 3 mit einem, in der Fahrzeugquerrichtung y fahrzeugäußeren Profilboden 27 ausgebildet, der an Profilkanten 29 nach fahrzeuginnen jeweils in eine vordere Profilflanke 31 und in eine hintere Profilflanke 33 übergeht. Von den beiden Profilflanken 31, 33 ragen jeweils nach fahrzeugvorne und nach fahrzeughinten Fügeflansche 35 ab. Das Blechinnenteil 9 weist einen fahrzeuginneren Profilboden 39 auf, der das Hohlprofil 13 überdeckt und der in der Fahrzeuglängsrichtung x nach vorne und fahrzeughinten jeweils mit Fügeflanschen 41 verlängert ist. Die Blechinnenteil-Fügeflansche 41 und die Blechaußenteil-Fügeflansche 35 sind unter Bildung einer Flanschverbindung 36 (Figuren 5 und 6) miteinander verschweißt.

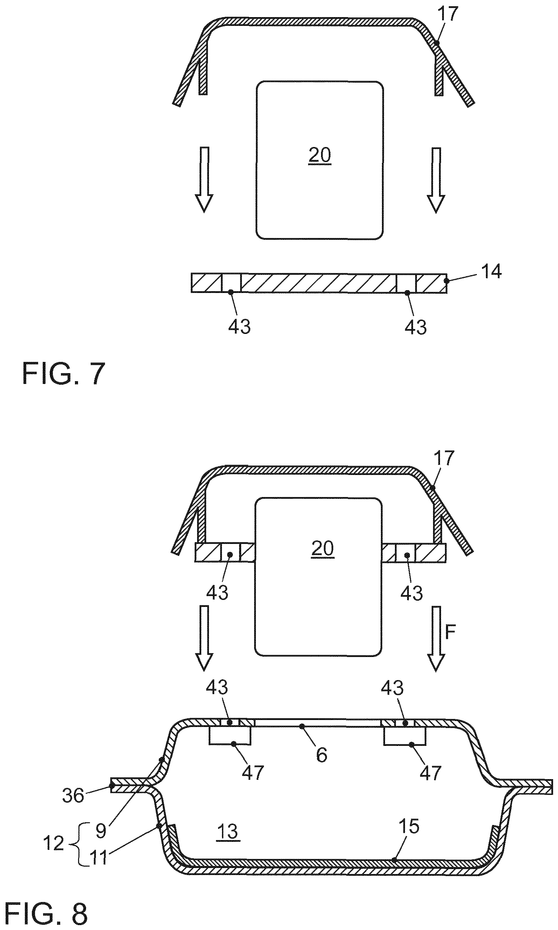

Zur Realisierung der Schraubverbindungen S1, S2 sind in der Fig. 5 oder 6 der Modulträger 14 und das Blechinnenteil 9 mit ihren Schraublöchern 43 (Figuren 7 und 8) in der Fahrzeugquerrichtung y in Flucht übereinander angeordnet. Durch die Schraublöcher 43 ist in der Fig. 5 oder 6 jeweils ein Schraubbolzen 45 geführt, dessen Schraubachse in der Fahrzeugquerrichtung ausgerichtet ist. Der Schraubbolzen 45 ist jeweils mit einer am Blechinnenteil befestigten Schweißmutter 47 verschraubt, und zwar so, dass der Modulträger 14 und das Blechinnenteil 9 zwischen einem Bolzenkopf des Schraubbolzens 45 und der Schweißmutter 47 verspannt sind.

In der Fig. 6 ist der fahrzeuginnere Profilboden 39 des Blechinnenteils 9 um einen Querversatz Δy von der Flanschverbindung 36 des Hohlträgers 12 nach fahrzeuginnen versetzt. Auf diese Weise wird ein vergrößerter Bauraum innerhalb des Hohlprofils 13 bereitgestellt, um darin teilweise den Gurtretraktor 20 zu positionieren.

Nachfolgend wird anhand der Fig. 7 bis 9 eine Prozesskette zum Zusammenbau der in der Fig. 2 gezeigten Karosseriestruktur beschrieben: Demzufolge wird in der Fig. 9 zunächst die Fahrzeugkarosserie 50 mit noch nicht montiertem Modulträger 14 bereitgestellt. Die Fahrzeugkarosserie 50 wird in einem Lackier-Prozessschritt L lackiert. Davon separat erfolgt ein Vormontage-Prozessschritt V. Im Vormontage-Prozessschritt V wird der Modulträger 14 mit den Funktionselementen 20, 21, 23 des Sicherheitsgurtsystems 19 mitsamt Säulenverkleidung 17 bestückt, und zwar unter Bildung der in der Fig. 3 gezeigten Vormontageeinheit VM. Die Vormontageeinheit VM wird im Zusammenbau-Prozessschritt ZSB an das Blechinnenteil 9 der B-Säule 3 gefügt, wie es in der Fig. 8 angedeutet ist, und dort verschraubt.

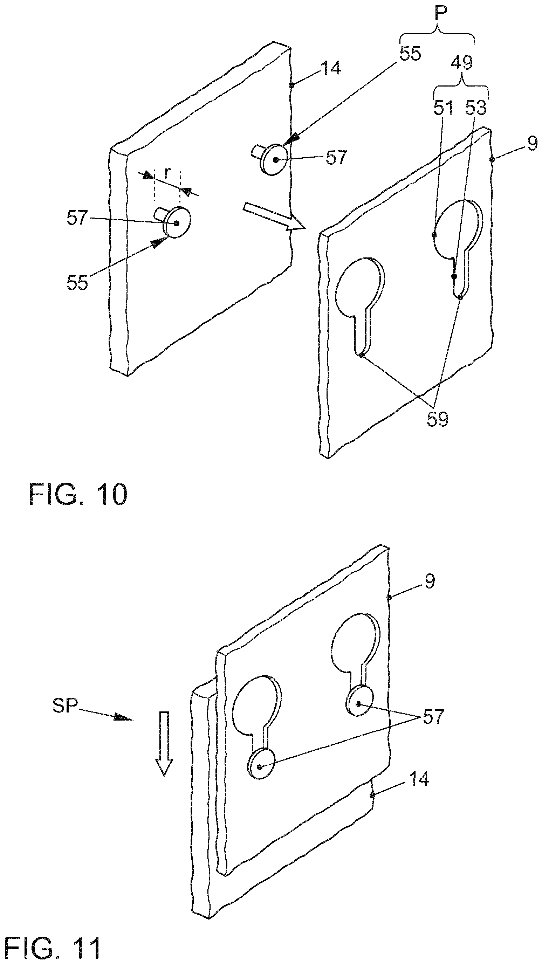

Wie aus der Fig. 10 und 11 hervorgeht, weist der Modulträger 14 und das Blechinnenteil 9 eine Positionierhilfe P auf. Mittels der Positionierhilfe P kann während des Zusammenbaus der Modulträger 14 in einer Schraubposition SP (Figur 11) am Blechinnenteil 9 lagerichtig vorpositioniert werden. In der, in der Fig. 11 gezeigten Schraubposition SP kann der Modulträger 14 über die obere Schraubverbindung S1 und über die untere Schraubverbindung S2 am Blechinnenteil 9 verschraubt werden.

Gemäß den Fig. 10 und 11 ist die Positionierhilfe P durch jeweils eine schlüssellochartige Positionieröffnung 49 im Blechinnenteil 9 realisiert. Die schlüssellochartige Positionieröffnung 49 weist einen querschnittsgroßen Einsteckbereich 51 und einen daran nach fahrzeugunten anschließenden querschnittskleinen Bereich 53 auf. Zudem weist die Positionierhilfe P einen mit der Blechinnenteil-Positionieröffnung zusammenwirkenden Positionierbolzen 55 auf, der von einer Basisfläche des Modulträgers abragt und einen aufgeweiteten Bolzenkopf 57 aufweist. Dieser ist um einen lichten Ringspalt r von der Montagefläche des Modulträgers 14 beabstandet.

Bei einer Vorpositionierung wird der Modulträger 14 mit seinem Positionierbolzen 55 zunächst in den Einsteckbereich 51 der Positionieröffnung 49 des Blechinnenteils 9 eingesteckt. Anschließend wird der Modulträger 14 unter Schwerkraftwirkung nach fahrzeugunten verlagert, bis der Positionierbolzen 55 auf einem Lochboden 59 (Fig. 10) der Positionieröffnung 49 aufliegt und ein Öffnungsrandbereich der Positionieröffnung 49 formschlüssig in den modulträgerseitigen Ringspalt r einragt.

### Bezugszeichenliste

- 1: Schweller
- 3: B-Säule
- 5: A-Säule
- 6: Montageöffnung für Gurtumlenker
- 7: Dachstruktur
- 8: Montageöffnung für Gurtretraktor
- 9: Blechinnenteil
- 11: Blechaußenteil
- 13: Hohlprofil
- 14: Montageträger
- 15: Verstärkungsblechteil
- 17: Säulenverkleidung
- 19: Sicherheitsgurtsystem
- 20: Gurtrektraktor
- 21: Endbeschlag
- 23: höhenverstellbarer Umlenkbeschlag
- 25: Sicherheitsgurt
- 27: Profilboden
- 29: Profilkanten
- 31: vordere Profilflanke
- 33: hintere Profilflanke
- 35: Fügeflansche
- 36: Flanschverbindung
- 39: Profilboden des Blechinnenteils
- 41: Fügeflansch
- 43: Schraublöcher
- 45: Schraubbolzen
- 47: Schweißmutter
- 49: Positionieröffnung
- 51: querschnittsgroßer Einsteckbereich
- 53: querschnittskleiner Bereich
- 55: Positionierbolzen
- 57: Positionierkopf
- 59: Bodenkante
- Δy: Querversatz
- r: Ringspalt
- S1, S2: Schraubverbindungen
- C: Clipsverbindungen
- L: Lackier-Prozessschritt
- ZSB: Zusammenbau-Prozessschritt
- V: Vormontage-Prozessschritt
- FR: Fahrtrichtung
- VM: Vormontageeinheit
- P: Positionierhilfe
- SP: Schraubposition

## Patentansprüche

1. Karosseriestruktur für ein Fahrzeug, mit einer Karosseriesäule (3), insbesondere B-Säule, die aus einem fahrzeuginneren Blechinnenteil (9) und aus einem fahrzeugäußeren Blechaußenteil (11) aufgebaut ist, die einen Hohlträger (12) mit einem, in der Fahrzeughochrichtung (z) verlaufenden im Querschnitt geschlossenen Hohlprofil (13) bilden, wobei an dem Hohlträger (12) der Karosseriesäule (3) Funktionselemente (20, 21, 23) eines Sicherheitsgurtsystems (19) montierbar sind, **wobei** die Karosseriesäule (3) einen Modulträger (14) aufweist, der als eine, von der Fahrzeugkarosserie (50) separate Vormontageeinheit bereitstellbar ist, an der die Funktionselemente (20, 21, 23) des Sicherheitsgurtsystems (19) und/oder eine Säulenverkleidung (17) vormontierbar sind, und dass der Modulträger (14) mit bereits daran vormontierten Funktionselementen (20, 21, 23) und/oder Säulenverkleidung (17) in einen Zusammenbau-Prozessschritt (ZSB) an zumindest einer säulenseitigen Anbindungsstelle (S1, S2), insbesondere Klebverbindung und/oder Schraubverbindung, an das Blechinnenteil (9) des Hohlträgers (12) fügbar ist, **dadurch gekennzeichnet, dass** der Modulträger (14) und das Blechinnenteil (9) eine Positionierhilfe (P) aufweisen, mittels der während der Montage der Modulträger (14) in einer Schraubposition (SP) am Blechinnenteil (9) lagerichtig vorpositionierbar ist, in welcher Schraubposition (SP) der Modulträger (14) am Blechinnenteil (9) verschraubbar ist,
wobei die Positionierhilfe (P) zumindest eine schlüssellochartige Positionieröffnung (49) im Blechinnenteil (9) aufweist, die aus einem querschnittsgroßen Einsteckbereich (51) und einem daran nach fahrzeugunten anschließenden querschnittskleinen Bereich (53) besteht, und dass die Positionierhilfe (P) einen damit zusammenwirkenden Positionierbolzen (57) aufweist, der von einer Basisfläche des Modulträgers (14) abragt und einen ausgeweiteten Bolzenkopf (57) aufweist, der um einen lichten Ringspalt (r) von der Montagefläche des Modulträgers (14) beanstandet ist, der größer als die Blechdicke des Blechinnenteils (9) ist, und dass bei der Vorpositionierung zunächst der Modulträger (14) mit seinem Positionierbolzen (55) in den Einsteckbereich (51) der Blechinnenteil-Positionieröffnung (49) eingesteckt wird und anschließend unter Schwerkraftwirkung nach fahrzeugunten verlagert wird bis der Positionierbolzen (55) auf eine Bodenkante (59) der Positionieröffnung (49) aufliegt und ein Öffnungsrandbereich der Positionieröffnung (49) formschlüssig in den modulträgerseitigen Ringspalt (r) einragt.

2. Karosseriestruktur nach Anspruch 1, **dadurch gekennzeichnet, dass** prozesstechnisch vor dem Zusammenbau-Prozessschritt (ZSB) ein Lackier-Prozessschritt (L) erfolgt, bei dem die Fahrzeugkarosserie (50) mit noch nicht montiertem Modulträger (14) lackiert wird, und dass davon separat ein Vormontage-Prozessschritt (V) erfolgt, bei dem die Funktionselemente (20, 21, 23) und/oder die Säulenverkleidung (17) am Modulträger (14) vormontierbar sind, und dass anschließend im Zusammenbau-Prozessschritt (ZSB) der Modulträger (14) an das Blechinnenteil (9) der Fahrzeugkarosserie (50) gefügt wird.

3. Karosseriestruktur nach Anspruch 1 oder 2, **dadurch gekennzeichnet, dass** die säulenseitige Anbindungsstelle (S1, S2) eine Formschluss- und/oder Schraubverbindung ist, bei der der Modulträger (14) mit dem Blechinnenteil (9) der Karosseriesäule (3) verschraubt ist.

4. Karosseriestruktur nach Anspruch 1, 2 oder 3, **dadurch gekennzeichnet, dass** das Blechaußenteil (11) einen in der Fahrzeugquerrichtung (y) fahrzeugäußeren Profilboden (27) aufweist, der an Profilkanten (29) nach fahrzeuginnen in eine vordere Profilflanke (31) und in eine hintere Profilflanke (33) übergeht, von denen nach fahrzeugvorne und/oder nach fahrzeughinten Fügeflansche (35) abragen, und dass das Blechinnenteil (9) einen fahrzeuginneren Profilboden (39) aufweist, der in der Fahrzeuglängsrichtung (x) nach fahrzeugvorne und nach fahrzeughinten mit Fügeflanschen (41) verlängert sind die unter Bildung einer Flanschverbindung (36) an die Blechaußenteil-Fügeflansche (35) gefügt sind.

5. Karosseriestruktur nach einem der vorhergehenden Ansprüche, **dadurch gekennzeichnet, dass** zumindest eine erste Schraubverbindung (S1), insbesondere eine Doppelverschraubung, im oberen Kopfabschnitt des Blechinnenteils (9) ausgebildet ist und zumindest eine zweite Schraubverbindung (S2) im unteren Fußabschnitt des Blechinnenteils (9) ausgebildet ist.

6. Karosseriestruktur nach Anspruch 3, Anspruch 4, wenn dieser von Anspruch 3 abhängt, oder Anspruch 5, **dadurch gekennzeichnet, dass** zur Realisierung der Schraubverbindung (S1, S2) der Modulträger (14) und das Blechinnenteil (9) mit ihren Schraublöchern (43) in der Fahrzeugquerrichtung (y) in Flucht übereinander liegen, und dass durch die Schraublöcher (43) ein Schraubbolzen (45) geführt ist, dessen Schraubachse in der Fahrzeugquerrichtung (y) ausgerichtet ist, und dass insbesondere der Schraubbolzen (45) mit einer am Blechinnenteil (9) befestigten Schweißmutter (47) verschraubt ist, so dass der Modulträger (14) und das Blechinnenteil (9) zwischen einem Bolzenkopf des Schraubbolzens (45) und der Schweißmutter (47) verspannt sind.

7. Verfahren zum Zusammenbau einer Karosseriestruktur nach einem der vorhergehenden Ansprüche.

## Claims

1. Body structure for a vehicle, having a body pillar (3), in particular B pillar, which is constructed from a vehicle-interior sheet-metal inner part (9) and from a vehicle-exterior sheet-metal outer part (11) that form a hollow support (12) having a cross-sectionally closed hollow profile (13) running in the vertical direction (z) of the vehicle, wherein functional elements (20, 21, 23)) of a seatbelt system (19) can be mounted on the hollow support (12) of the body pillar (3), **wherein** the body pillar (3) has a module support (14) which can be provided as a preassembly unit which is separate from the vehicle body (50) and on which the functional elements (20, 21, 23) of the seatbelt system (19) and/or a pillar trim (17) can be preassembled, and in that the module support (14) together with the functional elements (20, 21, 23) and/or pillar trim (17) already preassembled thereon can be joined to the sheet-metal inner part (9) of the hollow support (12) at at least one pillar-side attachment point (S1, S2), in particular by an adhesive connection and/or screw connection, in an assembly process step (ZSB), **characterized in that** the module support (14) and the sheet-metal inner part (9) have a positioning aid (P) by means of which the module support (14) can be correctly positioned in advance in a screw-in position (SP) on the sheet-metal inner part (9) during the assembly, in which screw-in position (SP) the module support (14) can be screwed to the sheet-metal inner part (9), wherein the positioning aid (P) has at least one keyhole-like positioning opening (49) in the sheet-metal inner part (9), the positioning opening consisting of a cross-sectionally large insertion region (51) and a cross-sectionally small region (53) adjoining the latter downwards in the vehicle, and **in that** the positioning aid (P) has a positioning bolt (57) which interacts therewith, protrudes from a base surface of the module support (14) and has a widened bolt head (57) which is spaced apart from the assembly surface of the module support (14) by a clear annular gap (r) which is greater than the sheet-metal thickness of the sheet-metal inner part (9), and **in that**, during the positioning in advance, first of all the module support (14) is inserted with its positioning bolt (55) into the insertion region (51) of the sheet-metal inner part positioning opening (49) and is subsequently moved downwards in the vehicle under the action of gravity until the positioning bolt (55) rests on a bottom edge (59) of the positioning opening (49) and an edge region of the positioning opening (49) projects in a form-fitting manner into the annular gap (r) on the module-support side.

2. Body structure according to Claim 1, **characterized in that** in terms of process before the assembly process step (ZSB) there is a painting process step (L) in which the vehicle body (50) with the module support (14) not yet mounted is painted, and **in that**, separately therefrom, a preassembly process step (V) takes place, in which the functional elements (20, 21, 23) and/or the pillar trim (17) can be preassembled on the module support (14), and **in that** subsequently, in the assembly process step (ZSB), the module support (14) is joined to the sheet-metal inner part (9) of the vehicle body (50).

3. Body structure according to Claim 1 or 2, **characterized in that** the pillar-side attachment point (S1, S2) is a form-fitting and/or screw connection in which the module support (14) is screwed to the sheet-metal inner part (9) of the body pillar (3).

4. Body structure according to Claim 1, 2 or 3, **characterized in that** the sheet-metal outer part (11) has a vehicle-external profile base (27) in the transverse direction (y) of the vehicle, said profile base merging at profile edges (19) towards the interior of the vehicle into a front profile flank (31) and into a rear profile flank (33) from which joining flanges (35) protrude towards the front of the vehicle and/or towards the rear of the vehicle, and **in that** the sheet-metal inner part (9) has a vehicle-interior profile base (39) which is extended in the longitudinal direction (x) of the vehicle towards the front of the vehicle and towards the rear of the vehicle by joining flanges (41) which are joined to the sheet-metal outer-part joining flanges (35) so as to form a flange connection (36).

5. Body structure according to one of the preceding claims, **characterized in that** at least one first screw connection (S1), in particular a double screw connection, is formed in the upper head section of the sheet-metal inner part (9), and at least one second screw connection (S2) is formed in the lower foot section of the sheet-metal inner part (9).

6. Body structure according to Claim 3, Claim 4, if the latter is dependent on Claim 3, or Claim 5, **characterized in that**, in order to realize the screw connection (S1, S2), the module support (14) and the sheet-metal inner part (9) lie with their screw holes (43) in alignment one above the other in the transverse direction (y) of the vehicle, and **in that** a screw bolt (45), the screw axis of which is aligned in the transverse direction (y) of the vehicle, is guided through the screw holes (43), and **in that** in particular the screw bolt (45) is screwed to a welding nut (47), which is fastened to the sheet-metal inner part (9), such that the module support (14) and the sheet-metal inner part (9) are clamped between a bolt head of the screw bolt (45) and the welding nut (47).

7. Method for assembling a body structure according to one of the preceding claims.

## Revendications

1. Structure de carrosserie pour un véhicule, comprenant un montant de carrosserie (3), en particulier un montant B, qui est constitué d'une pièce intérieure en tôle (9) à l'intérieur du véhicule et d'une pièce extérieure en tôle (11) à l'extérieur du véhicule, qui forment une poutre creuse (12) ayant un profil creux (13) fermé en section transversale, qui s'étend dans la direction verticale (z) du véhicule, des éléments fonctionnels (20, 21, 23) d'un système de ceinture de sécurité (19) étant aptes à être montés sur le support creux (12) du montant de carrosserie (3), le montant de carrosserie (3) comportant un support de module (14), qui peut être prévu en tant qu'unité de prémontage séparée de la carrosserie de véhicule (50), sur lequel les éléments fonctionnels (20, 21, 23) du système de ceinture de sécurité (19) et/ou un habillage de montant (17) sont aptes à être prémontés, et en ce que le support de module (14), avec les éléments fonctionnels (20, 21, 23) et/ou l'habillage de montant (17) déjà prémontés sur lui, est apte à être assemblé à la pièce intérieure en tôle (9) de la poutre creuse (12) dans une étape de processus d'assemblage (ZSB) en au moins un point d'assemblage (S1, S2) côté montant, en particulier un assemblage par collage et/ou un assemblage par vis, **caractérisé en ce que** le support de module (14) et la pièce intérieure en tôle (9) présentent un organe (P) d'aide au positionnement au moyen duquel, pendant le montage, le support de module (14) est apte à être prépositionné en position correcte dans une position de vissage (SP) sur la pièce intérieure en tôle (9), position de vissage (SP) dans laquelle le support de module (14) est apte à être vissé sur la pièce intérieure en tôle (9),
l'organe (P) d'aide au positionnement présentant au moins une ouverture de positionnement (49) en forme de trou de serrure dans la pièce intérieure en tôle (9), qui se compose d'une zone d'insertion (51) de grande section transversale et d'une zone (53) de petite section transversale s'y raccordant vers l'extérieur du véhicule, et **en ce que** l'organe (P) d'aide au positionnement présente un bouton de positionnement (57) qui coopère avec lui, dépassant d'une surface de base du support de module (14) et présentant une tête de bouton (57) élargie, qui est espacée de la surface de montage du support de module (14) par un espace annulaire libre (r), qui est supérieur à l'épaisseur de la tôle de la pièce intérieure (9) en tôle, et **en ce que**, lors du pré-positionnement, le support de module (14) est tout d'abord inséré avec son bouton de positionnement (55) dans la zone d'insertion (51) de l'ouverture de positionnement (49) de la pièce intérieure en tôle et est ensuite déplacé vers l'extérieur du véhicule par gravité jusqu'à ce que le bouton de positionnement (55) repose sur un bord de fond (59) de l'ouverture de positionnement (49) et qu'une zone de bord d'ouverture de l'ouverture de positionnement (49) pénètre par complémentarité de forme dans l'espace annulaire (r) côté support de module.

2. Structure de carrosserie selon la revendication 1, **caractérisée en ce que**, en termes de technique de processus, une étape de processus de peinture (L) a lieu avant l'étape de processus d'assemblage (ZSB), au cours de laquelle la carrosserie de véhicule (50) est peinte avec le support de module (14) non encore monté, et **en ce qu'**une étape de processus de pré-assemblage (V) a lieu séparément de celle-ci, au cours de laquelle les éléments fonctionnels (20, 21, 23) et/ou l'habillage de montant (17) sont aptes à être prémontés sur le support de module (14), et **en ce qu'**ensuite, au cours de l'étape de processus d'assemblage (ZSB), le support de module (14) est assemblé à la pièce intérieure en tôle (9) de la carrosserie de véhicule (50).

3. Structure de carrosserie selon la revendication 1 ou 2, **caractérisée en ce que** le point d'assemblage (S1, S2) côté montant est un assemblage par complémentarité de forme et/ou par vissage, dans lequel le support de module (14) est vissé à la pièce intérieure en tôle (9) du montant de carrosserie (3).

4. Structure de carrosserie selon la revendication 1, 2 ou 3, **caractérisée en ce que** la pièce extérieure en tôle (11) présente un fond profilé (27) extérieur au véhicule dans la direction transversale (y) du véhicule, qui se transforme vers l'intérieur du véhicule, au niveau des arêtes profilées (29), en un flanc profilé avant (31) et en un flanc profilé arrière (33), à partir desquels des brides d'assemblage (35) font saillie vers l'avant et/ou vers l'arrière du véhicule, et **en ce que** la pièce intérieure en tôle (9) présente un fond de profilé (39) intérieur au véhicule, qui s'étend dans la direction longitudinale (x) du véhicule vers l'avant du véhicule et vers l'arrière du véhicule par des brides d'assemblage (41) qui sont assemblées aux brides d'assemblage (35) de la pièce extérieure en tôle en formant un assemblage par brides (36).

5. Structure de carrosserie selon l'une des revendications précédentes, **caractérisée en ce qu'**au moins un premier assemblage vissé (S1), en particulier un double assemblage vissé, est réalisé dans la section de tête supérieure de la pièce intérieure en tôle (9) et au moins un deuxième assemblage vissé (S2) est réalisé dans la section de pied inférieure de la pièce intérieure en tôle (9).

6. Structure de carrosserie selon la revendication 3, la revendication 4 lorsque celle-ci dépend de la revendication 3, ou la revendication 5, **caractérisée en ce que**, pour réaliser l'assemblage vissé (S1, S2), le support de module (14) et la pièce intérieure en tôle (9) sont superposés en alignement par leurs trous de vissage (43) dans la direction transversale (y) du véhicule, et **en ce qu'**un boulon fileté (45) est guidé à travers les trous de vissage (43), l'axe de vissage étant orienté dans la direction transversale (y) du véhicule, et **en ce que**, notamment, le boulon fileté (45) est vissé à un écrou à souder (47) fixé sur la pièce intérieure en tôle (9), de sorte que le support de module (14) et la pièce intérieure en tôle (9) sont serrés entre une tête de boulon du boulon fileté (45) et l'écrou à souder (47).

7. Procédé d'assemblage d'une structure de carrosserie selon l'une des revendications précédentes.
